# EUROPEAN PATENT SPECIFICATION

(11) **EP 2 197 747 B1**
(45) Date of publication and mention of the grant of the patent: **28.10.2015**
(21) Application number: 07804790.9
(22) Date of filing: 21.08.2007
(51) Int. Cl.: B65B 11/50, B65B 11/54, B65B 25/00, B65B 61/24, B65D 75/32, B65D 85/60

(54) **PACKAGING UNIT and METHOD FOR PACKAGING PRODUCTS**
VERPACKUNGSEINHEIT und VERFAHREN ZUR VERPACKUNG VON PRODUKTEN
UNITE DE CONDITIONNEMENT et PROCEDE DE CONDITIONNEMENT DE PRODUITS

(43) Date of publication of application: 23.06.2010
(73) Proprietor: Ferrero S.p.A., 12051 Alba (Cuneo) (IT)
(72) Inventor: BARTOLI, Andrea, I-42100 Reggio Emilia (IT); BARTOLI, Alberto, I-42020 Quattro Castella (RE) (IT)
(74) Representative: Rambelli, Paolo
(86) International application number: PCT/IB2007/002399
(87) International publication number: WO 2009/024830

(56) References cited:
- EP-A- 0 082 952
- EP-A- 0 591 742
- EP-A- 0 790 184
- EP-A- 1 046 579
- WO-A-2008/018008
- US-A- 5 167 974

## Description

The invention concerns a packaging unit, and a method for packaging products.

Packaging units are known, comprising a wrapping sheet of material such as aluminium, which is wrapped around a product, for example a chocolate. The wrapping comprises an edge area twisted around itself to define a closure area, in such a way as to cover an entire outer surface of the chocolate.

A cup-shaped element (the so-called "pleated cup") is provided, for example, made of paper, comprising a base from which a wavy wall projects out peripherally and transversely to surround the wrapping area. The wrapping and the cup-shaped element are held together by means of a certain amount of glue.

A drawback of known packaging units is that they do not make it possible to effectively preserve the product contained inside. Specifically, the wrapping is not able to prevent air from penetrating inside and this can, therefore, affect the quality of the product.

Another drawback of known packaging units is that, it may so happen, that the glue penetrates into the wrapping, contaminating the product it contains.

EP 1 046 579 A describes a packaging unit and a method for its production, according to the pre-characterizating part of the appended independent product and method claims.

One object of the invention is to improve the known packaging units by providing a packaging unit which can easily be opened by the user while being capable of preserving the product and protecting it from the outside air.

A further object of the invention is to provide a method which make it possible to package products in a simple, effective manner.

In a first aspect of the invention, there is provided a method for packaging a product as defined by the appended claims.

In a second aspect of the invention, a packaging unit is provided as defined by the appended claims.

Owing to the first and second aspect of the invention, it is possible to obtain a packaging unit which can easily be opened by the consumer and which, in the closed condition, allows preservation of the product. Specifically, owing to welding between the wrapping element and the cup- shaped element, air is prevented from penetrating into the cavity. The product quality is thus preserved.

The method of the invention comprises the known steps of forming a wrapping element from a sheet material, introducing a product in said wrapping element, associating a further sheet material with said wrapping element, and folding said further sheet material to obtain a corrugated portion.

The apparatus for packaging a product according to the method of the invention comprises a forming station suitable for forming a cavity from a portion of sheet material, a filling station suitable for filling said cavity with said product, a welding station suitable for closing said cavity with a further portion of sheet material, and a thermoforming station arranged downstream of said filling station suitable for thermoforming said sheet material.

Said apparatus comprises welding means comprising a first welding member and a second welding member reciprocally movable to lock therebetween areas of a first sheet material and of a second sheet material, wherein said first welding member and said second welding member have such welding surfaces as to generate a non-planar welding.

Said apparatus further comprises a heat-welding station suitable for heat-welding a first portion of sheet material and a second portion of sheet material, shape stabilizing means comprising a first shape stabilizing member and a second shape stabilizing member reciprocally movable for locking and cooling areas of said sheet material, said first shape stabilizing member and said second shape stabilizing member being provided with such shape stabilizing surfaces as to generate a non-planar surface on said sheet material.

The method of the invention is applicable to obtain geometrically complex packaging units which, in addition to having an aesthetically pleasing appearance are able to effectively preserve the quality of a product contained in them. Specifically, it is possible to generate a cup-shaped element, arranged for containing, at least partly, the wrapping element during the packaging of the product, with consequent reduction of production times and costs.

The apparatus may comprise cavity means provided with a forming surface suitable for forming a sheet material, with a supporting surface suitable for supporting said undeformed sheet of material, and with an inlet portion which surrounds an opening of said cavity means, wherein said inlet portion comprises sliding promoting means shaped for guiding a portion of said sheet material from a first configuration in which said sheet material faces said supporting surface, to a second configuration in which said sheet material faces said forming surface during the forming.

It is thus possible to bring the sheet of material from a flat configuration to a concave configuration in order to obtain a wrapping element more precisely.

The method of the invention can be carried out with the use of an apparatus, comprising shearing means for shearing a sheet material, comprising a first shearing member and a second shearing member reciprocally movable for separating a portion of sheet material from said sheet material, wherein said shearing means further comprises folding means shaped for folding said portion of sheet material.

Said apparatus for packaging a product comprises a forming station provided with cavity means provided with a forming surface arranged for forming on a portion of sheet material a cavity suitable for receiving said product in a subsequent filling station, wherein said forming station comprises stop means arranged for receiving and blocking an adjacent cavity already formed on said sheet material, when said portion of sheet material is formed in said cavity means.

It is thus possible to mould in sequence on the sheet of material which is unwound from a reel and fed along a forward direction, a plurality of cavities suitable for receiving respective products, aligned and regularly spaced from one another by a required pitch. During the working of the apparatus, an adjacent cavity already formed and located downline is inserted in a reference cavity of stop means and housed therein and blocked by an abutting element. The stop means thus blocks the sheet material arranged downstream in such a way that the cavity formed by the forming surface is spaced by the required pitch from the adjacent cavity already formed.

The invention will be better understood and carried into effect with reference to the attached drawings, in which some embodiments are shown by way of non- limiting example, in which:
Figure 1 is a lateral schematic and partially sectioned view of an apparatus for packaging a product according to the method of the invention;
Figure 2 shows a portion of the apparatus of Figure 1;
Figure 3 is a schematic top view of a portion of the apparatus of Figure 1;
Figures 4 to 7 show schematic operating configurations of the apparatus of Figure 1;
Figure 8 is a schematic section of a packaging unit according to the invention;
Figure 9 is a schematic section of a packaging unit, which is not subject-matter of the invention;
Figure 10 is a schematic section of another embodiment of the apparatus for packaging products, in a first operating configuration;
Figure 11 is a schematic plan view of a portion of the apparatus of Figure 10;
Figure 12 is a schematic section of the apparatus of Figure 10 in a second operating configuration;
Figure 13 is a schematic section of the apparatus of Figure 10 in a third operating configuration;
Figure 14 is a schematic section of a moulding station of a further embodiment of the apparatus for packaging products, in an operating configuration;
Figure 15 is a plan view of the moulding station of Figure 14, in which some parts have been removed to better highlight the others;
Figure 16 is a perspective view of the moulding station of Figure 14, in which some parts have been removed and others have been spaced from one another for better understanding;
Figure 17 is a schematic section of a moulding station of a further embodiment of the apparatus for packaging products, in an operating configuration;
Figures 18 and 19 are sections of a moulding station of a further embodiment of the apparatus for packaging products, in an opening condition and a closing condition, respectively;
Figure 20 is a plan view of the moulding station of Figure 18, in which some parts have been removed to better highlight the others;
Figure 21 is a lateral view of the moulding station of Figure 18, in the opening condition;
Figure 22 is a perspective view of the moulding station of

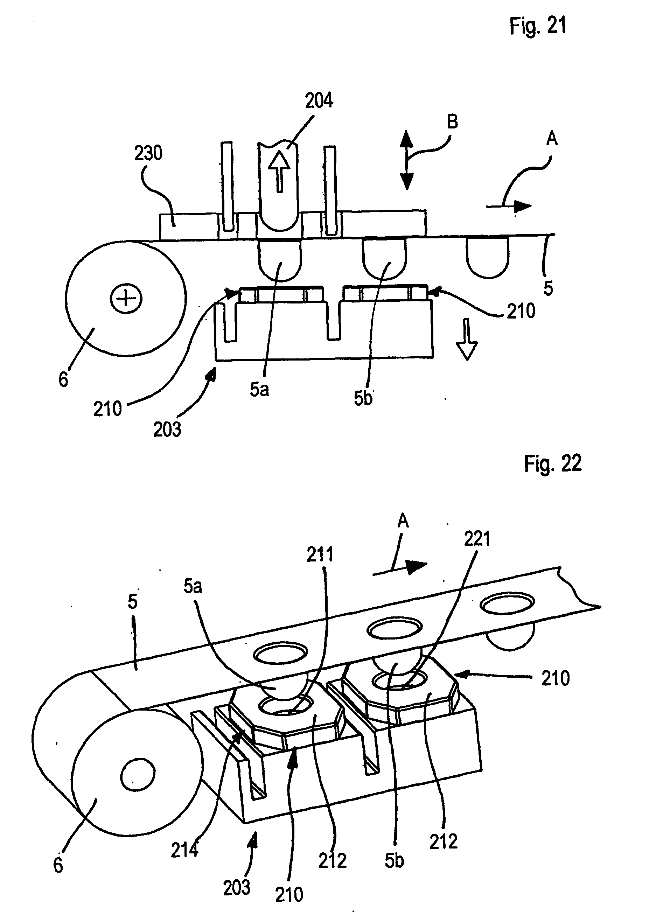

Figure 21, in which some parts have been removed to better highlight the others;

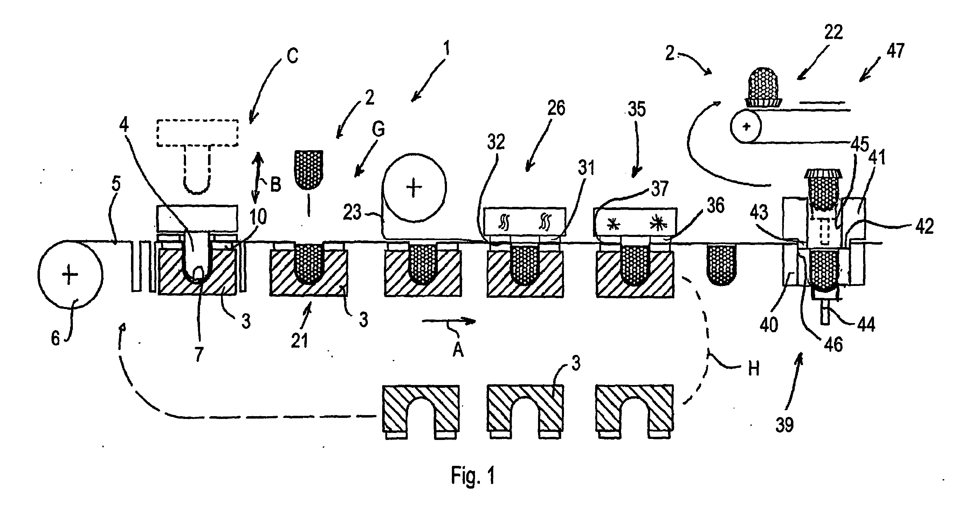

Figures 1 to 7 show an apparatus 1 for packaging a product 2, using a sheet of material 5 which is unwound from a roll 6 and is made to move along feed A.

Apparatus 1 comprises a plurality of mould elements 3 which are made to move by steps in feed direction A. The mould elements 3 move along a closed path H, so that, at the end of each operating cycle, they can again be arranged near a moulding region C.

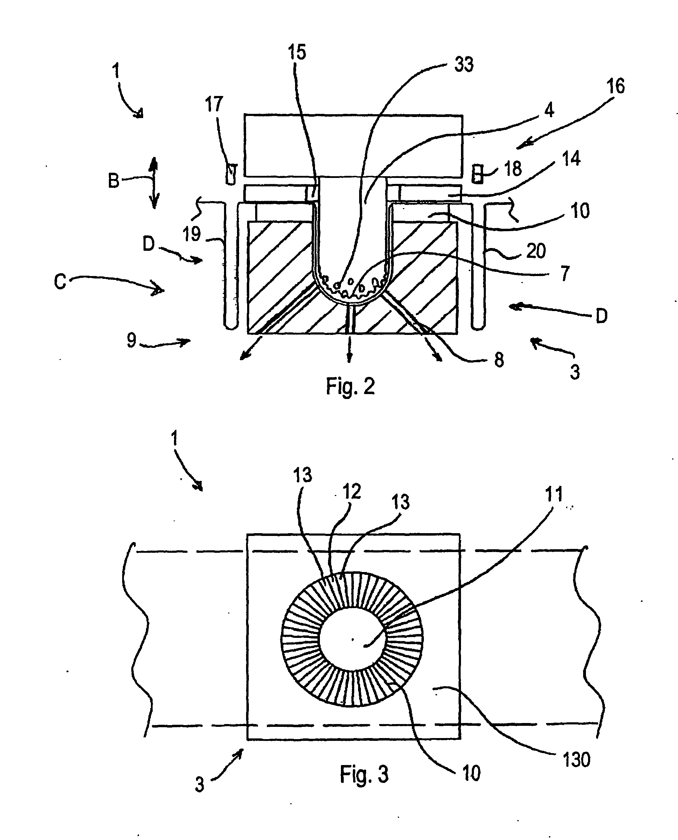

Apparatus 1 comprises a punch element 4, movable in moulding direction B transverse to feed direction A, which cooperates with one mould element 3 at a time for processing the sheet of material 5 in moulding region C and obtaining a wrapping 21 of a packaging unit 22 Punch element 4 is .provided with an irregular surface 7 (better shown in Figure 2) which serves to obtain irregular shaped areas on the sheet of material 5 to generate an aesthetically pleasing effect.

The punch element 4 may be provided with ducts 33 by means of which air can be sucked in to make the sheet of material 5 adhere perfectly to the irregular surface.

Each mould element 3 comprises a moulding cavity 9, shaped to receive inside it part of the sheet of material 5 and punch element 4 in a moulding configuration S. Mould element 3 is provided with suction ducts 8 by means of which air is sucked into moulding cavity 9 in such a way that the sheet of material 5 can be retained inside the latter while punch element 4 moves away from mould element 3 after the moulding.

In an embodiment of apparatus 1, punch element 4 has a substantially smooth surface, while moulding cavity 9 is provided with a further irregular surface. During the moulding, the air sucked in through suction ducts 8 forces the sheet of material 5 to stick to the further irregular surface in such a way as to create irregular shaped areas on it.

Each mould element 3 is provided on top with a sliding promoter element 10 suitable for interacting with the sheet of material 5 in such a way that the latter can penetrate correctly into moulding cavity 9. The sliding promoter element 10 is crown shaped and surrounds an inlet section 11 of moulding cavity 9. The sliding promoter element 10 comprises a sliding wall or surface 130 and is provided on top with a plurality of projecting portions 12 and a plurality of recessed portions 13 extending radially in such a way as to define a circle and arranged for interacting with the sheet of material 5. Each projecting portion 12 is adjacent to and placed between two recessed portions 13. Similarly, each recessed portion 13 is adjacent to and placed between two projecting portions 12. when the sheet of material 5 slides along sliding promoter element 10 to enter moulding cavity 9, the projecting portions 12 and the recessed portions 13 act on the sheet of material 5 in such a way that it can be deformed suitably to pass from a flat configuration to a substantially concave configuration.

A presser element 14 is provided, arranged near sliding promoter element 10 which serves to guide the sheet of material 5.

When the punch element 4 acts to introduce a portion of the sheet of material inside moulding cavity 9, the sheet of material 5 can slide correctly between sliding promoter element 10 and presser element 14. Presser element 14 is provided with a central opening 15 (shown in Figure 2) through which punch element 4 can pass to reach moulding cavity 9. The central opening 15 extends in such a way that the projecting portions 12 and the recessed portions 13 are free and not covered by presser element 14. Presser element 14 thus does not interfere with a portion of the sheet of material 5 near the inlet section 11, allowing it to deform suitably during interaction between the projecting portions 12 and the recessed portions 13.

Apparatus 1 comprises a comb device 16 which serves to accumulate a certain quantity of sheet of material 5 in accumulation areas D near moulding area C. Comb device 16 comprises a bar element 17 and a further bar element 18 arranged transverse to feed direction A and moulding direction B. Bar element 17 and further bar element 18 are movable parallel to moulding direction B from a disengagement position E, in which they are separated from the sheet of material 5 and arranged on the opposite side of mould element 3 in relation to the sheet of material 5, to an operating position F, in which they are arranged alongside mould element 3 and are farther away from presser element 14 in relation to sliding promoter element 10. By passing from the disengagement position E to operating position F, bar element 17 and further bar element 18 move the sheet of material 15 in such a way that a first fold portion 19 and a second fold position 20 are defined in it. Thus, during the moulding, mould element 3 which is in moulding region C is fed with a portion of sheet of material 5 which concerns the first fold portion 19 and the second fold portion 20.

A filling station G is provided downline of moulding station C, for introducing product 2 inside wrapping 21.

Downline of filling station G operating means are provided which associate with wrapping 21 a further sheet of material 23, having, for example, the same width as the sheet of material 5, which is unwound from a further roll 24 and is overlapped on inlet section 11.

In one embodiment of apparatus 1, a cutting station is provided upline of the operating means which serves to cut the sheet of material 5 creating an edge area 21 of wrapping 21. A substantially flat ring-shaped portion 28, surrounding inlet section 11, is further obtained, on wrapping 21, which is thus separated from sheet of material 5. Downline of the operating means, a sealing station 26 is provided, which serves to seal wrapping 21 and further sheet of material 23 reciprocally. Sealing station 26 comprises a sealing punch 31 provided with an operating surface 32 which is heated and which interacts with sliding promoter element 10. Operating surface 32 is shaped similar to sliding promoter element 10, i.e. it is provided with further projecting portions and further recessed portions arranged radially alternately. The further projecting portions and the further recessed portions are offset by a certain angular extent with respect to projecting portions 12 and recessed portions 13 so that, during the sealing, each further projecting portion of sealing punch 31 can be received in a corresponding recessed portion 13 of sliding promoter element 10. Similarly, each projecting- 'portion 12 of sliding promoter element 10 can be received in a corresponding further recessed portion of sealing punch 31.

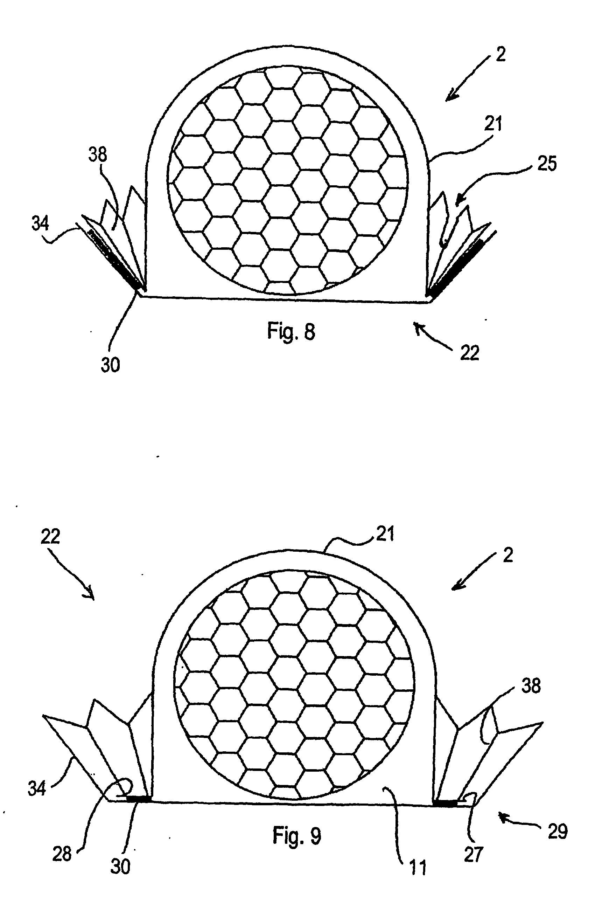

This makes it possible to seal wrapping 21 and further sheet of material 23 along a perimeter area which surrounds inlet section 11 so as to obtain a continuous sealing area 30 which prevents air from penetrating and reaching product 2. The continuous sealing area 30 has such an extension as to involve a wide area of the sheet of material 5 and of further sheet of material 23, to obtain the packaging unit 22 shown in Figure 8.

Operating surface 32 interacts with sliding promoter element 10 to shape further sheet of material 23, generating a crown-shaped portion having a wavy surface. This crown-shaped portion is a precursor of cup-shaped element 34 intended to contain wrapping 21 at least partly. It is possible to envisage that operating surface 32 will cooperate with sliding promoter element 10 to shape the sheet of material 5 as well as the further sheet of material 23. In this case, the precursor of cup-shaped element 34 obtained comprises a double layer portion of sheet of material.

Downline of sealing station 26 a shape stabilization station 35 is provided, which serves to cool and stabilize the continuous sealing area 30 and an area which concerns the precursor of cup-shaped element 34. Shape stabilization station 35 comprises a shape stabilizer element 36, provided with a shape stabilizer surface 37 which is cooled and shaped in a manner similar to sliding promoter element 10, i.e., it is provided with still further projecting portions and still further recessed portions arranged radially alternately. The still further projecting portions and the still further recessed portions are offset by a certain angular extent with respect to: projection portions 12 and recessed portions 13 so that, during the stabilization, each still further projecting portion of shape stabilizer element 36 can be received in a corresponding recessed portion 13 of sliding promoter element 10. Similarly, each projecting portion 12 of sliding promoter element 10 can be received in a corresponding still further recessed portion of shape stabilizer element 36. This makes it possible to cool continuous sealing area 30 and the precursor of cup-shaped element 24, in such a way that a corrugated surface 38 is defined on the latter.

Downline of shape stabilizer station 35, a cutting-folding station 39 is provided, which serves to cut the sheet of material 5 and the further sheet of material 23, if the packaging unit of Figure 8 is produced, or only the further sheet of material 23, if the packaging unit of Figure 9 is produced.

The cutting-folding station 39 comprises a first cutting member 40 and a second cutting member 41 reciprocally movable parallel to moulding direction B. The first cutting member 40 comprises a crown-shaped operating surface 42, co-operating with a cutting portion 43 of second cutting member 41. The operating surface 42 and the cutting portion 43 cut a portion of a sheet of material which is surrounded by a cylindrical surface 46 of the first cutting member 40 in such a way as to obtain the precursor of cup-shaped element 34. In one embodiment, if the packaging unit 22 shown in Figure 8 is produced, the cutting-folding station 39 generates a cut 25 which serves to facilitate the opening of packaging unit 22.

A pusher 44 is provided for pushing packaging unit 22 through a passage duct 45 made in second cutting member 41. Specifically, during operation, the first cutting member 40 and the second cutting member 41 are spaced from one another after the cutting to such an extent as to release the precursor of cup-shaped element 34. At this point, pusher 44 acts in such a way that the precursor of cup-shaped element 34 is removed from an area placed between cutting portion 43 and operating surface 42, and acts with cylindrical surface 46. The precursor of cup-shaped element 34 having an extension greater than the transverse section of passage duct 45 folds in such a way as to surround part of wrapping 21, as shown in Figures 8 and 9.

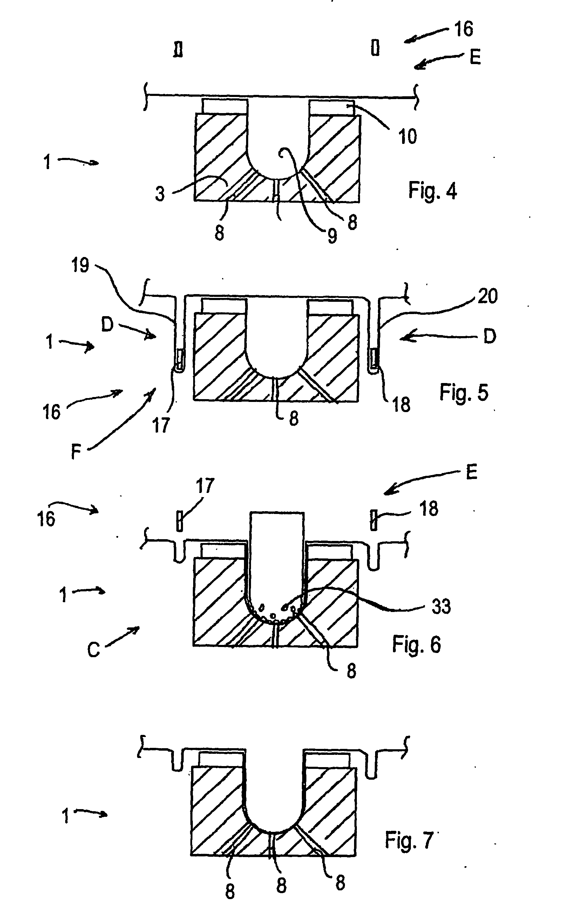

During the working, the sheet of material 5 moves forward by one step in the feed direction A and subsequently the comb device 16 is activated which further unwinds the sheet of material 5 from roll 6 in such a way that the first fold portion 19 and the second fold portion 20 are generated, as shown in Figure 5. Punch element 4 pushes part of the sheet of material 5 into moulding cavity 9, so that the latter is fed with sheet of material taken from accumulation areas D. Thus, a remaining part of the sheet of material 5 further downline of moulding area C is not moved.

While punch element 4 advances in moulding cavity 9, air is sucked in through ducts 33. When the end-of-travel is reached, air suction through ducts 33 is stopped and air is sucked in through suction ducts 8 to retain the shaped sheet of material. Mould element 3 is moved forward by the same step towards filling station G where product 2 is introduced inside wrapping 21. Subsequently, mould element 3 moves forward near operator means which associate further sheet of material 23 with wrapping 21. The further sheet of material 23 and sheet of material 5 supporting wrapping 21 are moved forwards towards sealing station 26 to create the continuous sealing area 30 and fold the precursor of cup-shaped element 34. Subsequently, wrapping 21 and further sheet of material 23 are brought to shape stabilization station 35 which acts to stabilize the shape of the cup-shaped element precursor 34. Wrapping 21 and further sheet of material 23 are separated from mould element 3 and are arranged in cutting-folding station 39 to be processed as described earlier. The packaging unit 22 thus obtained is then moved away from apparatus 1 by means of a conveyor 47.

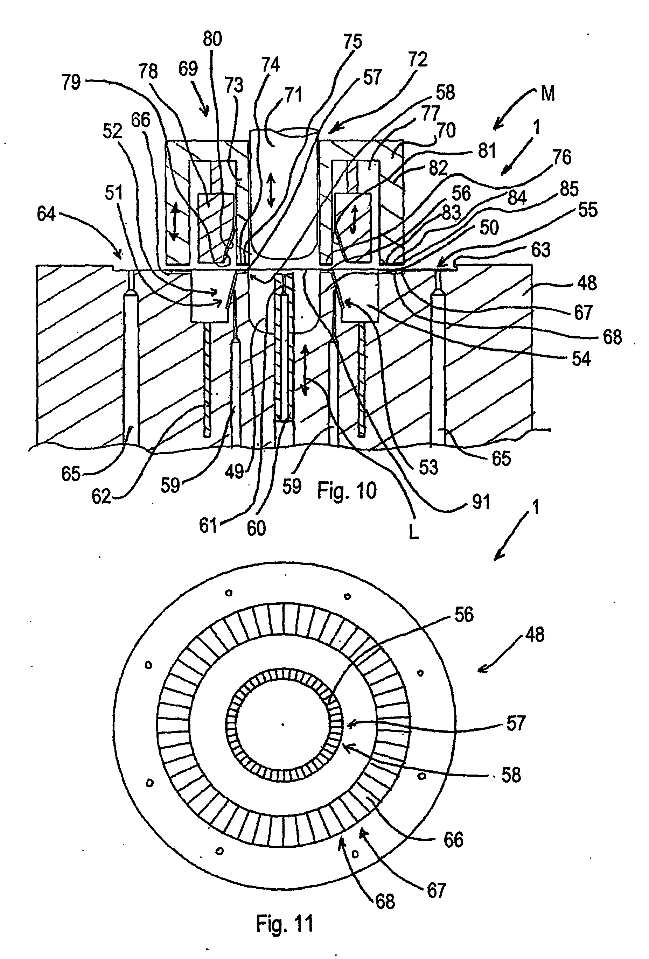

Figures 10 to 13 show another embodiment of apparatus 1 for packaging products 2 comprising a plurality of further mould elements 48 arranged for processing disk-shaped portions of sheet of material. The further mould elements 48 can be arranged peripherally and angularly equidistant from one another on a rotating carousel which is rotated in steps. Alternatively, the further mould elements 48 can be moved, for example, by means of conveyor belts or other moving means, along a substantially rectilinear closed path, similarly to that described with reference to Figure 1.

Each further mould element 48, comprises a further moulding cavity 49, suitable for moulding wrapping 21, and ducts for sucking in air from further moulding cavity 49 during the working.

A bar element 60 is provided, movable in a direction L inside a longitudinal cavity made in further mould element 48 and which is connected to further moulding cavity 48. An upper end of bar element 60 comprises a suction opening 61 of a duct that serves to take in air during the working.

The further moulding cavity 49 is surrounded laterally by a truncated-conical portion 50 provided with a truncated-conical surface 51, converging upwards, corrugated and arranged outside further moulding cavity 49.

The truncated-conical surface 51 is provided with first projecting portions 52 and first recessed portions 53 distributed alternately.

First suction ducts 59 are provided, which serve to take in air through the truncated-conical surface 51 during the working, as described below.

The truncated-conical portion 50 is delimited at the top by a first ring-shaped surface 56 provided with second projecting portions 57 and second recessed portions 58 distributed radially alternately.

The further mould element 48 comprises a first ring-shaped cavity 54 which surrounds the truncated-conical portion 50 and which is delimited at the top by a circular supporting surface 55 suitable for receiving the sheet of material to support it. The circular supporting surface 55 is delimited peripherally by a cylindrical surface 63 so that a disk-shaped seat 64 is defined.

Second suction ducts 65 are provided, arranged below the disk-shaped seat 64, which, during the working, suck out air through circular supporting surface 55.

A second ring-shaped surface 66 is provided on an area of the circular supporting surface 55 nearer the first ring-shaped cavity 54, having third projecting portions 67 and third recessed portions 68, arranged radially alternately. Supporting elements 62 are provided, movable in direction L, from a position in which they are arranged below first ring-shaped cavity 54 to another position in which they project through the first ring-shaped cavity 54 to project at least partly in relation to truncated-conical portion 50.

Apparatus 1 comprises a first operating unit 69 positioned in an operating area M and arranged for interacting with one further mould element 48 at a time to shape a first disk-shaped portion 91 of the sheet of material and obtain wrapping 21.

The first operating unit 69 comprises a further presser element 70.movable in direction L, and arranged for pressing the sheet of material against the further mould element 48 and for shaping it.

Further presser element 70 is provided with a central cavity 72 inside which a punch 71 is provided, movable in direction L. Punch 71 co-operates with bar element 60 and with further moulding cavity 49 for shaping the sheet of material.

The central cavity 72 is delimited laterally by a first cylindrical portion 73 provided below with a third ring-shaped surface 74 arranged for co-operating with the first ring-shaped surface 56.

The third ring-shaped surface 74 comprises fourth projecting portions 75 and fourth recessed portions 76 arranged radially, alternately. The fourth projecting portions 75 and the fourth recessed portions 76 and angularly out-of-phase to a certain extent in relation to second projecting portions 57 and to second recessed portions 58. Each second recessed portion 58 can receive inside it a corresponding fourth projecting portion 75, and each fourth recessed portion 76 can receive inside it a corresponding second projecting portion 57.

Inside further presser element 70 a second ring-shaped cavity 77 is provided, which surrounds the first cylindrical portion 73. Inside the second ring-shaped cavity 77 a ring-shaped moulding element 78 is housed, movable in relation to the latter in direction L.

The ring-shaped moulding element 78 comprises inside it a further truncated-conical surface 79, converging upwards and arranged for co-operating with truncated-conical surface 51.

The further truncated-conical surface 79 comprises fifth projecting portions 80 and fifth recessed portions 81 arranged radially, alternately. The fifth projecting portions 80 and the fifth recessed portions 81. are angularly offset to a certain extent in relation to the first projecting portions 52 and to the first recessed portions 53. Each first recessed portion 53 can thus receive inside it a corresponding fifth projecting portion 80, and each fifth recessed portion 81 can receive inside it a corresponding first projecting portion 52.

The further presser element 70 comprises more peripherally a second cylindrical portion 82 which delimits the second ring-shaped cavity 77.

The second cylindrical portion 82 is provided below with a fourth ring-shaped surface 83, arranged for co-operating with the second ring-shaped surface 66.

The fourth ring-shaped surface 83 comprises sixth projecting portions 84 and sixth recessed portions 85 arranged radially, alternately. The sixth projecting portions 84 and the sixth recessed portions 85 are angularly offset to a certain extent in relation to the third projecting portions 67 and to the third recessed portions 68. Each third recessed portion 68 can thus receive inside it a corresponding sixth projecting portion 84, and each sixth recessed portion 85 can receive inside it a corresponding third projecting portion 67.

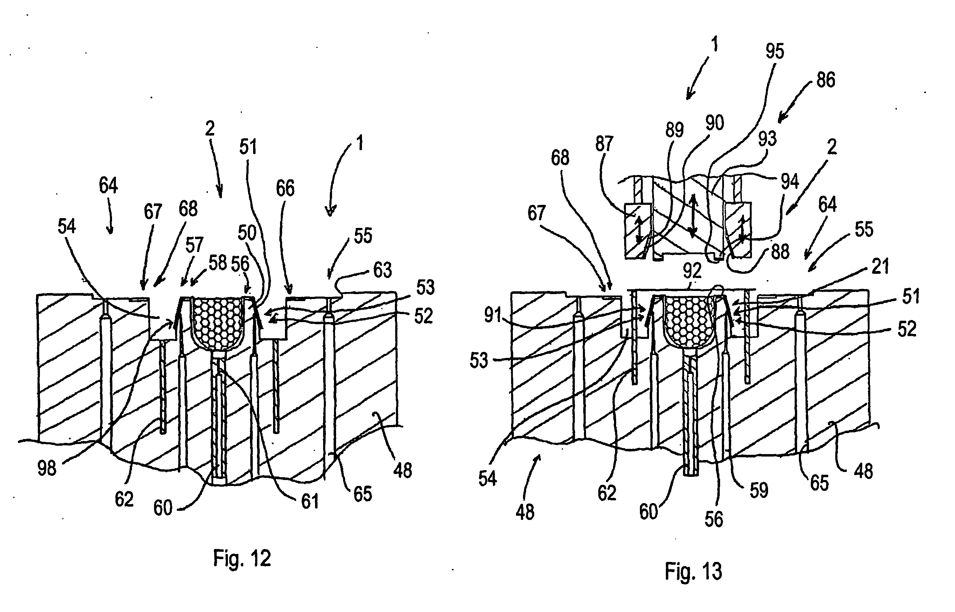

Apparatus 1, with reference to Figure 13, comprises a second operating unit 86 positioned in a further operating area N and arranged for interacting with one further mould element 48 at a time to process a second disk-shaped portion 92 of the sheet of material. The second operating unit 86 comprises a further ring-shaped moulding element 87, movable closer to and farther away from further mould element 48. The further ring-shaped moulding element 87 co-operates with the truncated-conical portion 50 to shape an area of the second disk-shaped portion 92 to obtain a corrugated surface. The further ring-shaped moulding element 87 can, further, seal a peripheral area of the second disk-shaped portion 92 on wrapping 21 obtained from the first disk-shaped portion to obtain the packaging unit of Figure 8.

The further ring-shaped moulding element 87 comprises inside it a still further truncated-conical surface 88, converging upwards and arranged for co-operating with truncated-conical surface 51.

The still further truncated-conical surface 88 comprises seventh projecting portions 89 and seventh recessed portions 90 arranged radially, alternately. The seventh projecting portions 89 and the seventh recessed portions 90 are angularly offset to a certain degree in relation to the first projecting portions 52 and to the first recessed portions 53. In this manner, each first recessed portion 53 can receive inside it a corresponding seventh projecting portion 89, and each seventh recessed portion 90 can receive inside it a corresponding first protecting portion 52. The second operating unit 86 comprises a moulder-sealer element 93 which serves to shape an area of the second disk-shaped portion 92 and to seal the latter to wrapping 21. The moulder-sealer element 93 is arranged coaxially to further ring-shaped moulder element 87, and is movable closer to and farther away from further mould element 48. The moulder-sealer element 93 has a ring-shaped projection 94 below comprising a fifth ring-shaped surface 95 suitable for interacting with the first ring-shaped surface 56.

The fifth ring-shaped surface 95 is provided with eighth projecting portions 96 and eighth recessed portions 97 arranged radially and alternately. The eighth projecting portions 96 and the eighth recessed portions 97 are angularly offset to a certain extent in relation to the second projecting portions 57 and to the second recessed portions 58. Each second recessed portion 58 can thus receive inside it a corresponding eighth projecting portion 96, and each eighth recessed portion 97 can receive inside it a corresponding second projecting portion 57.

During the working, a first disk-shaped portion 91 of the sheet of material is lodged in disk-shaped seat 64 of a further mould element 48 and the latter is positioned in operating area M to interact with the first operating unit 69. The further presser element 70 moves close to further mould element in such a way that the first disk-shaped portion 91 is locked between first ring-shaped surface 56 and third ring-shaped surface 74, and between second ring-shaped surface 66 and fourth ring-shaped surface 83.

Punch 71 is moved forwards to push the first disk-shaped portion 91 into further moulding cavity 49 to shape it. Bar element 60, initially positioned closer to further presser element 70, co-operates with punch 71 pushing the first disk-shaped portion 91 against the latter. During the forming, bar element 60 and punch 71 move forwards together, dragging the first disk-shaped portion 91 into further moulding cavity 49.

Further presser element 70 presses with a force which is sufficient to shape ring-shaped areas of first disk-shaped portion 91, but which makes it possible for the latter to slide because of the effect of the action of punch 71, between first ring-shaped surface 56 and third ring-shaped surface 74, and between second ring-shaped surface 66 and fourth ring-shaped surface 83. In this manner, during the movement of punch 71 in further moulding cavity 49, ring-shaped areas arranged progressively in the more peripheral regions of the first disk-shaped region 91 are induced to move forwards radially in such a way as to create corrugated surface 38.

The first ring-shaped surface 56 and the third ring-shaped surface 74 act as sliding promoter means suitable for interacting with the first disk-shaped portion 91 in such a way that the latter can penetrate correctly into moulding cavity 49.

The intake opening 61 and the ducts for sucking in air act in such a way as to make the sheet of material adhere to the surface of further moulding cavity 49 and retain it in the latter until the end of the moulding, i.e. when the punch is moved away from further mould element 48. The second suction ducts act in such a way as to keep the sheet of material adhering to the circular supporting surface 55.

Ring-shaped moulding element 78 is moved forwards towards the first ring-shaped cavity 54 in such a way that the outer most areas of the first disk-shaped portion 91 are folded to adhere to truncated-conical surface 51. A first corrugated surface 98 is thus obtained on the first disk-shaped portion 91. Subsequently, the further mould element 48, once disengaged from first operating unit 69, is moved towards a filling station in such a way that a product 2 is introduced into wrapping 21 just formed. The supporting elements 62, once projected at least partly outside the first ring-shaped cavity 54, receive in. support a second disk-shaped portion 92 of the sheet of material which must be processed to obtain a cup-shaped element 34 to be associated with wrapping 21.

The further mould element 48 is positioned in further operating area N to interact with the second operating unit 86. The moulder-sealer element 93 and the further ring-shaped moulding element 87 move forwards towards further mould element 48. The fifth ring-shaped surface 95 presses the second disk-shaped portion against the first ring-shaped surface 56 in such a way as to shape it and can generate a ring-shaped sealing between the second disk-shaped portion and wrapping element 21 which make it possible to obtain a peelable opening of the packaging unit.

The further ring-shaped moulding element 87 is gradually introduced in the first ring-shaped cavity 54, and the supporting elements 62 are retracted downwards. The still further truncated-conical surface 88 folds a peripheral portion of the second disk-shaped portion 92 towards the first corrugated surface 98 in such a way that a second corrugated surface is created on the second disk-shaped portion 92. The second corrugated surface and the first corrugated surface 98 can, thus, be sealed reciprocally to obtain the packaging unit shown in Figure 8. A cutting device may be provided, arranged, for example, upline of operating area M, which acts on the first disk-shaped portion and the second disk-shaped portion 92 in such a way as to obtain cut 25 at the end of the packaging.

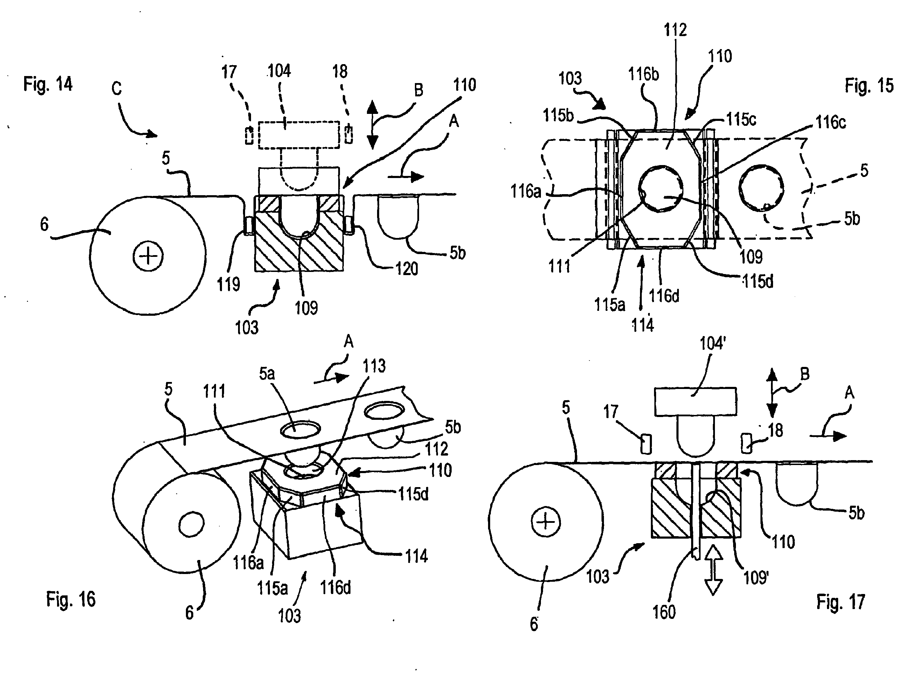

With reference to Figures 14 to 16, another embodiment of apparatus 1 is shown, in which each mould element 103 is provided on top with a sliding promoter element 110 suitable for interacting with the sheet of material 5 in such a way that the latter can correctly penetrate moulding cavity 109 of said mould element 103.

The sliding promoter element 110 has a substantially parallelepiped shape and has an opening 113 at an inlet section 111 for moulding cavity 109. The sliding promoter element 110 is provided with an upper substantially flat sliding surface or wall 112 and a lateral wall 114 provided with a plurality of sliding portions 115a, 115b, 115c, 115d arranged and shaped to facilitate sliding of said sheet of material inside moulding cavity 109.

The sliding portions comprise, for example, four main faces 115a, 115b, 115c, 115d arranged in twos, parallel and opposite, and inclined in relation to feed direction A.

The side wall 114 further comprises four secondary faces 116a, 116b, 116c, 116d arranged in twos, parallel and opposite, and respectively almost at right angles and parallel to said feed direction (A). Each secondary face 116a, 116b, 116c, 116d is placed between two main consecutive and adjacent faces 115a, 115b, 115c, 115d.

At par with the upper sliding wall 112, the main faces 115a, 115b, 115c, 115d of lateral wall 114 interact with the sheet of material 5, and specifically, with a first fold portion 119 and a second fold portion 120 formed by said sheet of material 5 in accumulation areas, by bar element 17 and further bar element 18 of comb device 16, described earlier, respectively.

The inclination of the main faces 115a, 115b, 115c, 115d in relation to feed direction A is such as to allow better sliding of the sheet of material 5 inside moulding cavity 109. Specifically, the main faces 115a, 115b, 115c, 115d inclined, for example by 45°, act on the sheet of material 5 in such a way that it can be deformed to pass from a flat configuration to a substantially concave configuration and form a cavity 5a, 5b suitable for subsequently receiving a product 2 to be packaged.

With reference to Figure 17, a still further embodiment of apparatus 1 is shown, in which a rod element 160 is provided, movable inside a longitudinal cavity made in mould element 103' and which is connected to moulding cavity 109'. Rod element 160 is substantially aligned to punch element 104' and movable with the latter along moulding direction B, during the moulding of said sheet of material 5.

An upper end of rod element 160 is arranged for engaging in moulding said sheet of material 5 and may comprise a suction opening of a duct for suction of air during the working.

The rod element 160 acts as a counter-punch and co-operates with punch element 104' and with moulding cavity 109' to shape the sheet of material 5. Specifically, the upper end of the counter-punch element 160 is so shaped as to abut an opposite portion of punch element 104' and block a portion of the sheet of material 5 during the moulding of the latter and prevent its shifting in a direction transverse to feed direction A.

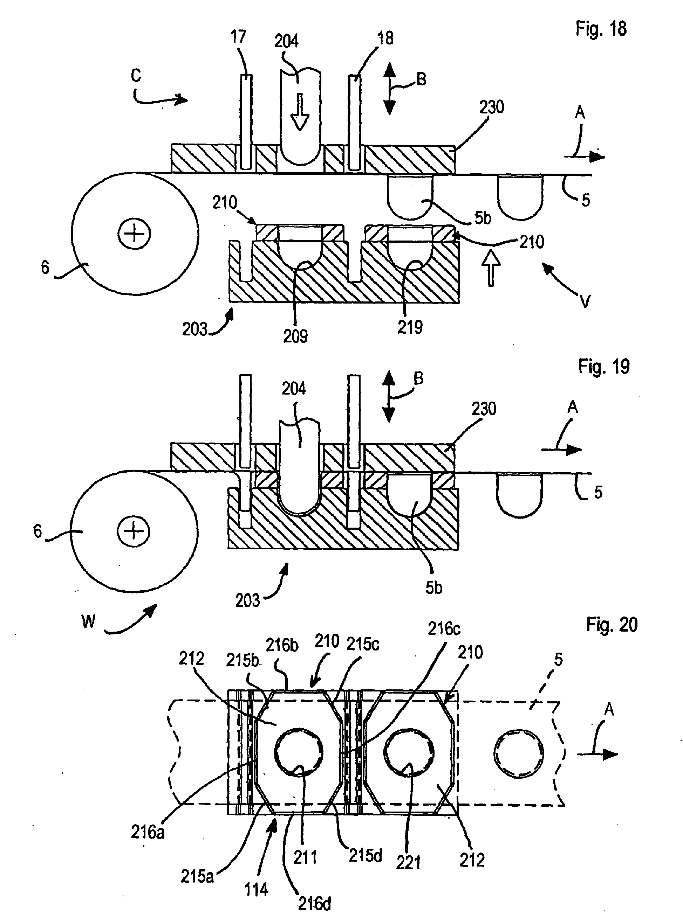

With reference to Figures 18 to 22, a further embodiment of apparatus 1 is shown, in which a mould element 203 is provided with a moulding cavity 209 and a further reference cavity 219, the latter being aligned to and placed downline of said moulding cavity 209 in relation to feed direction A of sheet of material 5.

Cavities 209, 219 are substantially identical and are placed at a distance equal to a pitch which divides two cavities 5a, 5b formed and adjacent on sheet of material 5.

Mould element 203 is provided on top with respective sliding promoter elements 210 suitable for interacting with the sheet of material 5 so that the latter can correctly penetrate into moulding cavity 209 and in reference cavity 219, respectively.

The sliding promoter elements 210 are substantially similar to sliding promoter element 110 of the embodiment of the apparatus of Figures 14 to 16, described earlier. Specifically, each sliding promoter element 210 has an opening 213 at an inlet section 211 of moulding cavity 209 and an inlet section 221 of reference cavity 219, respectively. Each sliding promoter element 210 is further provided with an upper, substantially flat sliding wall 212 and a lateral wall 214 formed by the four main faces 215a, 215b, 215c, 215d, inclined in relation to feed direction A and four secondary faces 216a, 216b, 216c, 216d.

During the working of this embodiment of apparatus 1, while a portion of the sheet of material 5 is deformed by punch element 204 in moulding cavity 209 to form a cavity 5a suitable for receiving said product 2, an adjacent cavity 5b, already formed and located downline, is inserted in reference cavity 219 and lodged and blocked therein between the respective sliding promoter element 210' and an upper abutting element 230, on a lower wall of which the sheet of material 5 slides. The reference cavity 219 and abutting element 230 thus act as stop means capable of blocking the sheet of material 5 downline in such a way that cavity 5a formed by punch element 204 in moulding cavity 209 is spaced, by the required pitch, from adjacent cavity 5b, already formed and located downline.

The embodiment of apparatus 1 of Figures 18 to 22 differs from the previous apparatus described in that mould element 203, at the moulding station, also moves in moulding direction B opposite to that of punch element 204. Specifically, mould element 203 and punch element 204 are movable in moulding direction B, between an opening condition V (Figure 18), where they are spaced from each other to allow said sheet of material 5 to move forwards, and a closure condition W (Figure 19), in which they substantially abut mutually to form a cavity 5a on said portion of sheet of material 5 in said moulding cavity 209, in co-operation with punch element 204, and to block an adjacent cavity 5b already formed inside reference cavity 219, in cooperation with abutting element 230.

The latter is fixed and has openings for the passage of punch element 204 and bar elements 17, 18 of comb device 16, described earlier.

## Claims

1. Method for producing a packaging for a product (2), comprising introducing said product (2) in a wrapping element (21), a forming step wherein said wrapping element (21) is formed from a first portion of sheet of material (5) and a further forming step wherein a cup-shaped element (34) is formed from a second portion of sheet of material (23), wherein said further forming step comprises folding said second portion of sheet of material (23) to obtain a corrugated portion (38), associating said cup-shaped element (34) with said wrapping element (21) in such a way that said cup- shaped element (34) contains, at least partially, said wrapping element (21), wherein said associating comprises welding said cup- shaped element (34) to said wrapping element (21) along an end portion of said wrapping element (21) delimiting an opening (11) through which said product (2) can be inserted in said wrapping element (21), said end portion being arranged in such a way as to substantially cover said corrugated portion (38) of said cup-shaped element (34), the method being **characterized in that** it comprises the step of providing opening facilitating means in said packaging,
wherein said opening facilitating means are provided by making a cut portion (25) on said end portion and on said corrugated portion (38) suitable for promoting the opening of said wrapping element (21) to remove said product (2) wherein said cut portion (25) extends from one free edge of said corrugated portion (38) and of said end portion towards an area near a bottom of said cup-shaped element (34).

2. Method according to claim 1, wherein said welding comprises joining said end portion with said corrugated portion (38) to create a substantially truncated-conical welding area (30) arranged to surround, at least partly, said wrapping element (21).

3. Method according to claim 1 or 2, wherein said forming step comprises further folding said first portion of sheet of material (5) to create a corrugated surface on said first portion.

4. Method according to claim 3, wherein said further forming step is provided after introducing said product in said wrapping element.

5. Method according to any of the previous claims, wherein, after said welding, an area of said first portion of sheet of material (5) and a further area of said second portion of sheet of material (23) are cooled to stabilize the shape of said corrugated portion (38) and of said end portion.

6. Packaging unit, comprising a wrapping element (21) suitable for wrapping a product (2) and provided with an end portion which delimits an opening (11) for inserting said product (2) in said wrapping element (21), a cup- shaped element (34) arranged for containing at least partially said wrapping element (21), wherein said cup-shaped element (34) and said wrapping element (21) are welded along said end portion to close a cavity suitable for containing said product, wherein:
said cup-shaped element (34) comprises a corrugated portion (38) which surrounds at least part of said wrapping (21), an end portion of said wrapping element (21) overlapping said corrugated portion (38), the unit being **characterized by** further comprising a cut portion (25) made on said corrugated portion (38) and on said end portion, suitable for acting as opening facilitating means wherein said cut portion (25) extends from one free edge of said corrugated portion (38) and of said end portion towards an area near a bottom of said cup-shaped element (34).

7. Packaging unit according to claim 6, wherein said cup- shaped element (34) and said wrapping element are welded in such a way as to prevent air from entering said cavity.

8. Packaging unit according to claim 6 or 7, wherein said end portion has an extension substantially equal to said corrugated portion (38), and/or
wherein said end portion and said corrugated portion (38) are welded along an area having an extension substantially equal to said end portion and/or to said corrugated portion (38).

## Patentansprüche

1. Verfahren zum Herstellen einer Verpackung für ein Produkt (2), umfassend: Einbringen des Produkts (2) in ein Umhüllungselement (21), einen Ausbildungsschritt, bei dem das Umhüllungselement (21) von einem ersten Abschnitt eines Materialblatts (5) ausgebildet wird und einen weiteren Ausbildungsschritt, bei dem ein becherförmiges Element (34) von einem zweiten Abschnitt eines Materialblatts (23) ausgebildet wird, wobei der weitere Ausbildungsschritt umfasst: Falten des zweiten Abschnitts des Materialblatts (23), um einen geriffelten Abschnitt (38) zu erhalten, Assoziieren des becherförmigen Elements (34) mit dem Umhüllungselement (21) derart, dass das becherförmige Element (34) zumindest teilweise das Umhüllungselement (21) enthält, wobei das Assoziieren umfasst: Schweißen des becherförmigen Elements (34) an das Umhüllungselement (21) entlang eines Endabschnitts des Umhüllungselements (21), welches eine Öffnung (11) begrenzt, durch die das Produkt (2) in das Umhüllungselement (21) eingeführt werden kann, wobei der Endabschnitt derart angeordnet ist, um den geriffelten Abschnitt (38) des becherförmigen Elements (34) im Wesentlichen abzudecken, wobei das Verfahren ferner **dadurch gekennzeichnet ist, dass** es den Schritt des Bereitstellens eines Öffnungserleichterungsmittels in der Verpackung umfasst,
wobei das Öffnungserleichterungsmittel bereitgestellt wird, indem ein Schnittabschnitt (25) am Endabschnitt und am geriffelten Abschnitt (38) hergestellt wird, der geeignet ist, das Öffnen des Umhüllungselements (21) zu fördern, um das Produkt (2) zu entnehmen, wobei sich der Schnittabschnitt (25) von einer freien Kante des geriffelten Abschnitts (38) und vom Endabschnitt zu einem Gebiet nahe eines Unterteils des becherförmigen Elements (34) erstreckt.

2. Verfahren gemäß Anspruch 1, bei dem das Schweißen ein Verbinden des Endabschnitts mit dem geriffelten Abschnitt (38) umfasst, um ein im Wesentlichen kegelstumpfförmiges Schweißgebiet (30) zu erzeugen, dass eingerichtet ist, zumindest teilweise das Umhüllungselement (21) zu umgeben.

3. Verfahren gemäß Anspruch 1 oder 2, bei dem der weitere Ausbildungsschritt ferner ein Falten des ersten Abschnitts des Materialblatts (5) umfasst, um eine geriffelte Fläche am ersten Abschnitt zu erzeugen.

4. Verfahren gemäß Anspruch 3, bei dem der weitere Ausbildungsschritt nach Einführen des Produkts in das Umhüllungselement vorgesehen ist.

5. Verfahren gemäß einem der vorhergehenden Ansprüche, bei dem, nach dem Schweißen, ein Gebiet des ersten Abschnitts des Materialblatts (5) und ein weiteres Gebiet des zweiten Abschnitts des Materialblatts (23) gekühlt werden, um die Gestalt des geriffelten Abschnitts (38) und des Endabschnitts zu stabilisieren.

6. Verpackungseinheit, mit einem Umhüllungselement (21), das zum Umhüllen eines Produkts (2) geeignet ist und mit einem Endabschnitt versehen ist, der eine Öffnung (11) zum Einführen des Produkts (2) in das Umhüllungselement (21) begrenzt, ein becherförmiges Element (34), das zum zumindest teilweisen Aufnehmen des Umhüllungselements (21) eingerichtet ist, wobei das becherförmige Element (34) und das Umhüllungselement (21) entlang des Endabschnitts verschweißt werden, um einen Hohlraum zu verschließen, der zum Aufnehmen des Produkts geeignet ist, wobei
das becherförmige Element (34) einen geriffelten Abschnitt (38) umfasst, der zumindest einen Teil der Umhüllung (21) umgibt, wobei ein Endabschnitt des Umhüllungselements (21) den geriffelten Abschnitt (38) überlappt, wobei die Einheit **dadurch gekennzeichnet ist, dass** sie ferner einen Schnittabschnitt (25) umfasst, der am geriffelten Abschnitt (38) und am Endabschnitt hergestellt ist, geeignet, um als ein Öffnungserleichterungsmittel zu wirken, wobei sich der Schnittabschnitt (25) von einer freien Kante des geriffelten Abschnitts (38) und vom Endabschnitt zu einem Gebiet nahe eines Unterteils des becherförmigen Elements (34) erstreckt.

7. Verpackungseinheit gemäß Anspruch 6, bei der das becherförmige Element (34) und das Umhüllungselement derart verschweißt sind, um ein Eintreten von Luft in dem Hohlraum zu verhindern.

8. Verpackungseinheit gemäß Anspruch 6 oder 7, bei der der Endabschnitt eine Verlängerung aufweist, die im Wesentlichen gleich dem geriffelten Abschnitt (38) ist, und/oder wobei der Endabschnitt und der geriffelte Abschnitt (38) entlang eines Gebiets geschweißt werden, das eine Verlängerung aufweist, die im Wesentlichen gleich dem Endabschnitt und/oder dem geriffelten Abschnitt (38) ist.

## Revendications

1. Procédé de fabrication d'un conditionnement d'un produit (2), comprenant l'introduction dudit produit (2) dans un élément d'emballage (21), une étape de formage dans laquelle ledit élément d'emballage (21) est formé à partir d'une première partie de feuille de matériau (5) et une autre étape de formage dans laquelle un élément en forme de coupelle (34) est formé à partir d'une seconde partie de feuille de matériau (23), dans lequel ladite autre étape de formage comprend le pliage de ladite seconde partie de feuille de matériau (23) pour obtenir une partie ondulée (38), l'association dudit élément en forme de coupelle (34) avec ledit élément d'emballage (21) de telle manière que ledit élément en forme de coupelle (34) contienne, au moins partiellement, ledit élément d'emballage (21), dans lequel ladite association comprend la soudure dudit élément en forme de coupelle (34) audit élément d'emballage (21) le long d'une partie d'extrémité dudit élément d'emballage (21) délimitant une ouverture (11) à travers laquelle ledit produit (2) peut être inséré dans ledit élément d'emballage (21), ladite partie d'extrémité étant conçue de telle manière à sensiblement recouvrir ladite partie ondulée (38) dudit élément en forme de coupelle (34), le procédé étant **caractérisé en ce qu'**il comprend l'étape de fourniture de moyens de facilitation d'ouverture dans ledit conditionnement,
dans lequel lesdits moyens de facilitation d'ouverture sont fournis en réalisant une partie de découpe (25) sur ladite partie d'extrémité et sur ladite partie ondulée (38) adéquate pour favoriser l'ouverture dudit élément d'emballage (21) pour retirer ledit produit (2), ladite partie de découpe (25) s'étendant depuis un bord libre de ladite partie ondulée (38) et de ladite partie d'extrémité vers une zone proche d'une partie inférieure dudit élément en forme de coupelle (34).

2. Procédé selon la revendication 1, dans lequel ladite soudure comprend la jonction de ladite partie d'extrémité à ladite partie ondulée (38) pour créer une zone de soudure sensiblement tronconique (30) conçue pour entourer, au moins partiellement, ledit élément d'emballage (21).

3. Procédé selon la revendication 1 ou 2, dans lequel ladite étape de formage comprend un pliage supplémentaire de ladite première partie de feuille de matériau (5) pour créer une surface ondulée sur ladite première partie.

4. Procédé selon la revendication 3, dans lequel ladite étape de formage supplémentaire est prévue après l'introduction dudit produit dans ledit élément d'emballage.

5. Procédé selon l'une quelconque des revendications précédentes, dans lequel, après ladite soudure, une zone de ladite première partie de feuille de matériau (5) et une zone supplémentaire de ladite seconde partie de feuille de matériau (23) sont refroidies pour stabiliser la forme de ladite partie ondulée (38) et de ladite partie d'extrémité.

6. Unité de conditionnement, comprenant un élément d'emballage (21) conçu pour emballer un produit (2) et dotée d'une partie d'extrémité qui délimite une ouverture (11) pour insérer ledit produit (2) dans ledit élément d'emballage (21), un élément en forme de coupelle (34) conçu pour contenir au moins partiellement ledit élément d'emballage (21), dans laquelle ledit élément en forme de coupelle (34) et ledit élément d'emballage (21) sont soudés le long de ladite partie d'extrémité pour fermer une cavité adéquate pour contenir ledit produit, dans laquelle :
ledit élément en forme de coupelle (34) comprend une partie ondulée (38) qui entoure au moins une partie dudit emballage (21), une partie d'extrémité dudit élément d'emballage (21) chevauchant ladite partie ondulée (38), l'unité étant **caractérisée en ce qu'**elle comprend en outre une partie de découpe (25) réalisée sur ladite partie ondulée (38) et sur ladite partie d'extrémité, adéquate pour servir de moyens de facilitation d'ouverture, ladite partie de découpe (25) s'étendant depuis un bord libre de ladite partie ondulée (38) et de ladite partie d'extrémité vers une zone proche d'une partie inférieure dudit élément en forme de coupelle (34).

7. Unité de conditionnement selon la revendication 6, dans laquelle l'élément en forme de coupelle (34) et ledit élément d'emballage sont soudés de telle manière à empêcher l'air de pénétrer dans ladite cavité.

8. Unité de conditionnement selon la revendication 6 ou 7, dans laquelle ladite partie d'extrémité présente un allongement sensiblement égal à ladite partie ondulée (38), et/ou
dans laquelle ladite partie d'extrémité et ladite partie ondulée (38) sont soudées le long d'une zone présentant un allongement sensiblement égal à ladite partie d'extrémité et/ou à ladite partie ondulée (38).
